# EUROPÄISCHE PATENTANMELDUNG

(11) **EP 1 370 124 A2**
(43) Veröffentlichungstag der Anmeldung: **10.12.2003**
(21) Anmeldenummer: 03101607.4
(22) Anmeldetag: 03.06.2003
(51) Int. Cl.: H05K 3/46

(54) **Läufer für Induktivsensor**

(30) Priorität: 06.06.2002 DE 10225019
(71) Anmelder: Hella KG Hueck & Co., 59552 Lippstadt (DE)
(72) Erfinder: Münzner, Frank, 59558 Lippstadt (DE)

(57) **Zusammenfassung**

Läufer für einen Induktivsensor, mit einer geschlossenen Leiterschleife (1) und mit einem Träger (2), auf welchem die Leiterschleife (1) angebracht ist,
dadurch gekennzeichnet,
dass der Läufer ein Kunststoffformteil aufweist, an welchem der Träger (2) befestigt ist und dass der Träger (2) durch Einspritzen in das Kunststoffformteil (3) in dem Kunststoffformteil (3) eingebettet und so an dem Kunststoffformteil (3) befestigt ist.

## Beschreibung

Die Erfindung betrifft einen Läufer für einen Induktivsensor, mit einer geschlossenen Leiterschleife und mit einem Träger, auf welchem die Leiterschleife angebracht ist.

Ein derartiger Läufer ist beispielsweise aus der Druckschrift EP 0 948 247 A2 bekannt. Dieser Induktivsensor ergibt sich, wenn durch Heißprägen aus einer Metallfolie heraus, die im geheizten Klischee vorgegebene Geometrie der Leiterschleife direkt auf die unter Umständen auch unebene Oberfläche eines thermoplastischen Trägers gestanzt und im gleichen Zuge mit diesem verschweißt wird. Dieses Verfahren ist auch unter dem Begriff MID-Verfahren bekannt. Die nach diesem Verfahren hergestellten Läufer, insbesondere die Verbindung zwischen der Leiterschleife und dem Träger hat sich in der Vergangenheit als zuverlässig und den durchschnittlichen Ansprüchen genügend erwiesen.

Ein derartiger Sensor weist jedoch einige Nachteile auf. So ist beispielsweise eine genaue Positionierung der Leiterschleife auf dem Träger sowohl in der Erstreckungsebene der Leiterschleife als auch in der Richtung senkrecht zu dieser Ebene nicht sehr präzise möglich. Dieses liegt u.a. auch daran, dass der Träger eine unebene Oberfläche hat.

Derartige Läufer werden häufig auf einem weiteren Gegenstand befestigt, wobei sich durch die Befestigung meist weitere Toleranzen, d. h., ungenaue Positionierungen ergeben. Der Erfindung liegt daher die Aufgabe zugrunde, einen Läufer vorzuschlagen, welcher einen Träger aufweist, an welchem die Leiterschleife genauer positioniert angebracht ist.

Diese Aufgabe wird erfindungsgemäß dadurch gelöst, dass der Läufer ein Kunststoffformteil aufweist, an welchem der Träger befestigt ist und dass der Träger durch Einspritzen in das Kunststoffformteil in dem Kunststoffformteil eingebettet und so an dem Kunststoffformteil befestigt ist. Die Leiterschleife wird bei einem erfindungsgemäßen Läufer auf einen herkömmlichen Träger aufgebracht. Dazu werden als Träger herkömmliche Träger verwendet, die mit Standardprozessen (fotolithografisch) mit der Leiterschleife versehen werden. Der Träger kann dabei insbesondere eine Leiterplatte vorzugsweise aus FR4, CEM 1 oder aus CEM3 sein. Auf einer derartigen Leiterschleife wird vorteilhaft durch bekannte Ätzverfahren die Leiterschleife auf der Leiterplatte aufgebracht. Die Leiterschleife selbst kann dabei aus Kupfer bestehen und hat üblicherweise eine Breite von 50 µm bis 1000 µm und eine Dicke von ca. 35 µm. Für besondere Anwendungen sind aber auch Dicken der Leiterbahnen der Leiterschleife von 18 µm, 12 µm oder 9 µm möglich.

Zur Herstellung des Läufers kann der Träger mit der darauf befindlichen Leiterschleife in eine Form gelegt werden, in welcher dann der Kunststoff eingespritzt wird. Wegen der immer gleichen Lage der Träger in der Form, ist der Träger und damit auch die Leiterschleifen in nahezu gleicher Lage an den abgeformten Kunststoffformteilen positioniert. Dieses erleichtert die Montage der Läufer mit den Ständern und ermöglicht den Zusammenbau von Sensoren mit gleichen mechanischen wie elektrischen Kennwerten.

Dadurch werden Induktivsensoren von gleichbleibender Qualität erhalten.

Das Kunststoffformteil kann gemäß der Erfindung den Träger zumindest teilweise umgreifen. Ebenso können an dem Träger Ausnehmungen, insbesondere Löcher oder Kerben vorgesehen sein, in welche Kunststoff des Kunststoffformteils eingespritzt ist, um eine formschlüssige Befestigung zu erreichen. Dieser eingespritzte Kunststoff kann ebenfalls den Träger am Rand der Ausnehmungen umgreifen. Der vorteilhafte plattenförmig ausgebildete Träger kann an den Kanten der sensorisch aktiven Seite des Trägers einen oder mehrere Absätze aufweisen, in welche Kunststoff des Kunststoffformteils die Kanten des Trägers umgreifend eingespritzt ist.

Das Kunststoffformteil kann in besonderen Ausführungen aus zwei Kunststoffkomponenten bestehen. Ein derartiger Läufer ist insbesondere Rotor für einen Induktivsensor für Drehbewegungen geeignet.

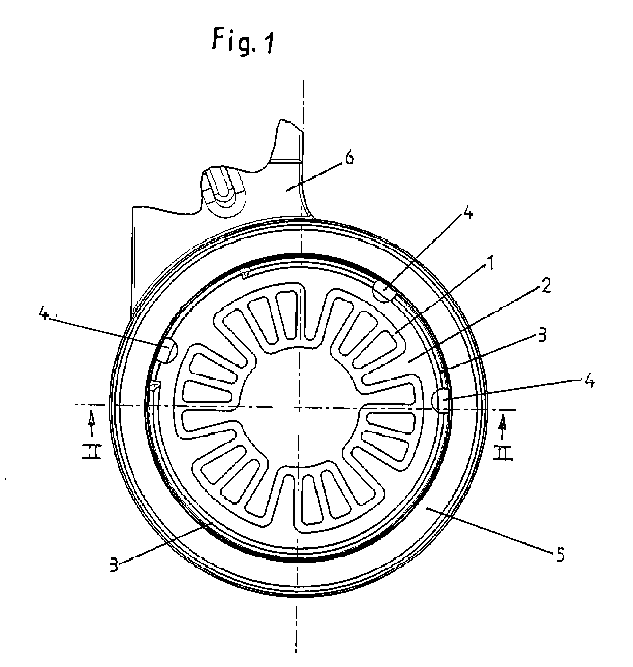

Ein Ausführungsbeispiel für einen erfindungsgemäßen Läufer ist anhand der Zeichnung näher beschrieben. Darin zeigt
- Fig. 1: einen als Rotor ausgebildeten Läufer und
- Fig. 2: einen Rotor gemäß Fig. 1 im Schnitt und zum Teil ausgebrochen gemäß der Linie ll-ll in Fig. 1.

Der in der Zeichnung dargestellte Rotor ist Teil eines Fahrpedalsensors, mit welchem die Stellung eines Fahrpedals eines Kraftfahrzeuges erfasst wird und so eine seilzuglose Übertragung der Pedalstellung zur Steuerung des Betriebszustandes des Verbrennungsmotors ermittelt wird. Der Pedalarm 6 des Fahrpedals ist nur zum Teil dargestellt. Über den kreiszylindrischen Teil 5 ist das Fahrpedal axial drehbar gelagert. Das kreiszylindrische Teil 5 ist einstückig mit einem Kunststoffformteil 3 verbunden. Dieses Kunststoffformteil 3, welches ebenfalls kreiszylindrische Form hat, ist an seiner Stirnseite mit einem Träger 2 verbunden, auf welchem eine geschlossene Leiterschleife vorgesehen ist. Bei dem Träger 2 handelt es sich um eine Kreisscheibe aus einem herkömmlichen Leiterplattenmaterial. Mit einem üblichen Verfahren ist eine Kupferleiterschleife 1 auf dem Leiterplattenmaterial des Trägers 2 aufgebracht.

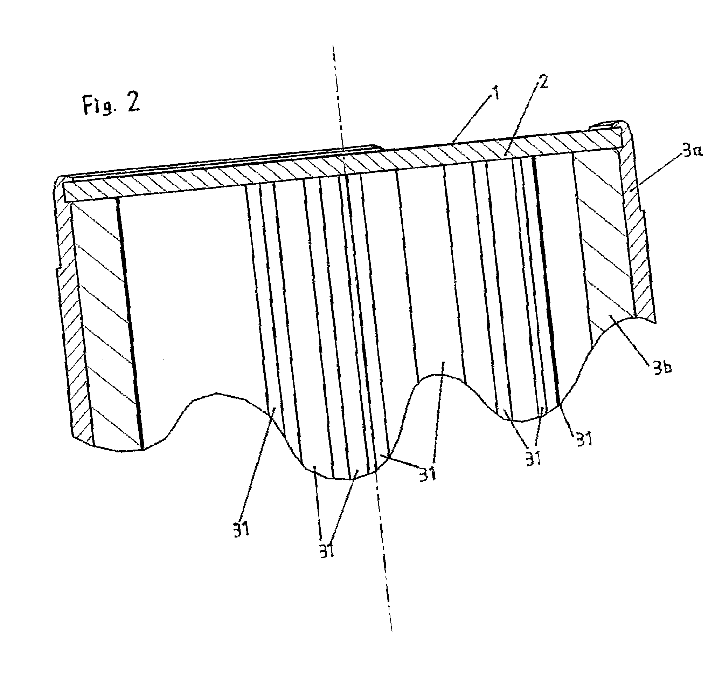

Anhand des Schnitts gemäß Fig. 2 wird nun der Aufbau des Kunststoffformteils 3 sowie die Verbindung des Kunststoffformteiles 3 mit dem Träger 2 beschrieben. Das Kunststoffformteil 3 besteht aus zwei konzentrisch angeordneten hülsenartigen Kunststoffkomponenten 3a,b, welche zusammen das zweikomponentige Kunststoffformteil 3 bilden. Die innere Komponente 3a,b des Kunststoffformteils 3 weist dabei innere in axialer Richtung verlaufende Rippen 31 auf, welche der Stabilität des Kunststoffformteils 3 dienen. Den stirnseitigen Rändern der inneren Kunststoffkomponente 3b stößt der Träger 2 an. Die äußere Kunststoffkomponente 3a des Kunststoffformteils 3 liegt an der äußeren Mantelfläche der inneren Kunststoffkomponente 3b an. Die Kunststoffkomponente 3a ragt dabei axial über die innere Kunststoffkomponente 3b hinaus, liegt so ebenfalls an der umlaufenden Kante des Trägers 2 an und umgreift diesen Träger.

## Patentansprüche

1. Läufer für einen Induktivsensor, mit einer geschlossenen Leiterschleife (1) und mit einem Träger (2), auf welchem die Leiterschleife (1) angebracht ist,
**dadurch gekennzeichnet,**
**dass** der Läufer ein Kunststoffformteil aufweist, an welchem der Träger (2) befestigt ist und dass der Träger (2) durch Einspritzen in das Kunststoffformteil (3) in dem Kunststoffformteil (3) eingebettet und so an dem Kunststoffformteil (3) befestigt ist.

2. Läufer nach Anspruch 1, **dadurch gekennzeichnet, dass** das Kunststoffformteil (3) den Träger (2) zumindest teilweise umgreift.

3. Läufer nach Anspruch 1 oder 2, **dadurch gekennzeichnet, dass** der Träger (2) Ausnehmungen insbesondere Löcher oder Kerben (4) aufweist, in welche Kunststoff des Kunststoffformteils (3) eingespritzt ist.

4. Läufer nach einem der Ansprüche 1 bis 3, **dadurch gekennzeichnet, dass** der Träger (2) plattenförmig ausgebildet ist und an den Kanten der sensorisch aktiven Seite des Trägers (2) einen oder mehrere Absätze aufweist, in welche Kunststoff des Kunststoffformteils (3) eingespritzt ist.

5. Läufer nach einem der Ansprüche 1 bis 4, **dadurch gekennzeichnet, dass** der Träger (2) eine Leiterplatte ist.

6. Läufer nach Anspruch 5, **dadurch gekennzeichnet, dass** die Leiterplatte (2) aus FR4, CEM1 oder CEM3 besteht.

7. Läufer nach Anspruch 5 oder 6, **dadurch gekennzeichnet, dass** die Leiterschleife durch Ätzverfahren auf der Leiterplatte (2) aufgebracht ist.

8. Läufer nach einem der Ansprüche 1 bis 7, **dadurch gekennzeichnet, dass** die Leiterschleife (1) aus Kupfer besteht.

9. Läufer nach einem der Ansprüche 1 bis 8, **dadurch gekennzeichnet, dass** das Kunststoffformteil (3) aus zwei Kunststoffkomponenten (3a, 3b) besteht.

10. Läufer nach einem der Ansprüche 1 bis 9, **dadurch gekennzeichnet, dass** der Läufer ein Rotor eines Induktivsensors für Drehbewegungen ist.

11. Induktivsensor mit Läufer und Ständer, **dadurch gekennzeichnet, dass** der Läufer nach einem der Ansprüche 1 bis 10 ausgebildet ist.
